(19) Europäisches Patentamt
European Patent Office
Office européen des brevets

(11) **EP 1 852 717 A1**

(12) **DEMANDE DE BREVET EUROPEEN**

(43) Date de publication:
**07.11.2007 Bulletin 2007/45**

(51) Int Cl.:
*G01T 1/29* (2006.01)     *G01T 7/00* (2006.01)

(21) Numéro de dépôt: **07101863.4**

(22) Date de dépôt: **07.02.2007**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **10.02.2006  FR 0650492**

(71) Demandeur: **COMMISSARIAT A L'ENERGIE ATOMIQUE**
**75015 Paris (FR)**

(72) Inventeurs:
• **Rinkel, Jean**
**94158 San Francisco, California (US)**
• **Dinten, Jean-Marc**
**69008, LYON (FR)**

(74) Mandataire: **Poulin, Gérard**
**Société BREVATOME**
**3, rue du Docteur Lancereaux**
**75008 Paris (FR)**

Remarques:
Une requête en rectification des dessins a été présentée conformément à la règle 88 CBE. Il sera statué sur cette requête au cours de la procédure engagée devant la division d'examen (Directives relatives à l'examen pratiqué à l'OEB, A-V, 3.).

(54) **Procédé d'estimation de rayonnement diffusé dans un détecteur bidimensionnel**

(57) Le rayonnement diffusé dans un détecteur (2) bidimensionnel par un rayonnement est estimé en soumettant le détecteur (2) à au moins deux irradiations en intercalant un réseau (3) d'absorbeurs séparés placé à des distances (L) variables du détecteur (2), en mesurant le rayonnement (diffusé) aux taches d'ombre (6) des absorbeurs et en l'interpolant ailleurs pour donner des images continues du rayonnement diffusé, et en en déduisant des paramètres modélisant une fonction de distribution du rayonnement diffusé dans le détecteur.

FIG.1

EP 1 852 717 A1

**Description**

L'invention présente concerne un procédé d'estimation, afin de le corriger, du rayonnement diffusé dans un détecteur bidimensionnel, notamment pour des acquisitions radiographiques ou tomographiques aux rayons X ; elle pourrait aussi s'appliquer à d'autres procédés d'acquisition et d'autres rayonnements.

Le rayonnement dirigé vers un objet à étudier puis vers un détecteur bidimensionnel placé derrière lui subit une atténuation par l'objet qui donne un rayonnement primaire, utile à la mesure. Le détecteur reçoit aussi un rayonnement diffusé par l'objet, qui trouble la mesure et dont la correction est l'objet de différents procédés dans l'art connu. Le rayonnement diffusé qu'on considère ici est un rayonnement diffusé supplémentaire d'une autre nature, produit à l'intérieur du détecteur par divers modes d'interaction entre le rayonnement et la matière du détecteur. Un détecteur ordinaire comprend des filtres, puis une couche de conversion des rayons X en photons, une couche de conversion des photons en électrons, un circuit de lecture et un substrat arrière. Le rayonnement peut être diffusé dans n'importe laquelle de ces couches, et notamment par les filtres, dans la couche de conversion en photons et dans le substrat, où une rétro-diffusion, faisant revenir le rayonnement vers l'avant du détecteur à travers le circuit de lecture, peut être détecté après avoir été absorbé par le scintillateur. Ce rayonnement diffusé dans le capteur nuit aussi à la netteté de la mesure et devrait être corrigé.

Les procédés connus ne font pas la distinction entre le diffusé de l'objet et le diffusé dans le capteur mais appliquent une correction globale. On peut citer des articles de Close R. A., Shah K. C. et Whiting J. S. 1999: "Regularization method for scatter-glare correction in fluoroscopic image" (Medical Physics, 26(9), p.1794-1801), et Kawata Y. et Niki N., 1996: "3-D Image Reconstruction with Veiling Glare correction to Improve the Contrast of 3-D Reconstructed Vascular Images" (IEEE Transaction On Nuclear Science, Vol. 43, N°1, p.304-309). Dans le premier de ces articles, appliqué à la radiographie, le rayonnement diffusé est modélisé comme une convolution du rayonnement primaire P(x) et par une constante $\beta_0$. Le rayonnement total à chaque pixel x du détecteur est ainsi donné par l'équation

$$I(x) = P(x) + \alpha H(x) * P(x) + \beta_0 + N(x) \text{ ,}$$

où $\alpha$ est une constante et N(x) est le bruit sur l'image. Le rayonnement primaire P est évalué en faisant une approximation sur cette équation, valable si le diffusé est suffisamment faible. La déconvolution qui serait nécessaire pour obtenir le rayonnement primaire P(x) en inversant l'équation précédente est alors remplacée par une convolution du rayonnement total I(x).

Dans le second de ces articles, appliqué à l'angiographie tridimensionnelle, le rayonnement diffusé $I_{sg}$ est modélisé comme une convolution du rayonnement primaire P par un noyau de convolution $h_{sg}$ selon l'équation $I_{sg} = (CI_p) * h_{sg}$, où C est une constante. La déconvolution pour déterminer le rayonnement primaire s'effectue par l'intermédiaire d'une transformation de Fourier rapide.

Ainsi qu'on l'a mentionné, les procédés mentionnés ci-dessus ne distinguent pas le rayonnement diffusé par l'objet du rayonnement diffusé dans le détecteur. Le rayonnement diffusé par l'objet a une portée beaucoup plus grande que le rayonnement diffusé dans le détecteur dans l'étendue de l'image , de sorte qu'une estimation commune des deux catégories du rayonnement diffusé attribue une portée excessive au rayonnement diffusé dans le détecteur et échoue donc à l'évaluer convenablement, ce qui altère la qualité de l'image dans les zones de fort contraste, où l'effet du rayonnement diffusé dans le détecteur est le plus sensible. Il est aussi à remarquer que le rayonnement diffusé par l'objet peut différer selon le procédé d'acquisition, ce qui incite à le corriger de façon spécialisée.

Une caractéristique avantageuse de l'invention est que le rayonnement diffusé dans le détecteur est évalué séparément, alors que le rayonnement diffusé dans l'objet pourra être corrigé par un procédé différent.

Sous sa forme la plus générale, l'invention est relative à un procédé d'estimation d'un rayonnement diffusé dans un détecteur bidimensionnel, caractérisé en ce qu'il consiste à : effectuer, en utilisant un rayonnement identique, une mesure d'irradiation directe du détecteur, une première mesure d'irradiation indirecte du détecteur en interposant un absorbeur composé d'un réseau bidimensionnel d'éléments absorbeurs du rayonnement à une première distance du détecteur, et une seconde mesure d'irradiation indirecte du détecteur en interposant l'absorbeur à une seconde distance du détecteur ; à déduire une première image de rayonnement diffusé et une seconde image de rayonnement diffusé sur le détecteur de la première et de la seconde mesure d'irradiation indirecte ; à calculer un premier paramètre lié à une portée du rayonnement diffusé dans le détecteur par une comparaison de la première image de rayonnement diffusé et de la seconde image de rayonnement diffusé, et un second paramètre lié à une intensité du rayonnement diffusé dans le détecteur par une comparaison de l'image d'irradiation directe et d'une des images d'irradiation indirecte ; et, quand un rayonnement d'un objet à étudier a été mesuré, à corriger ce rayonnement par un calcul de déconvolution utilisant les paramètres.

Dans une variante, les images du rayonnement diffusé sont obtenue simultanément au moyen d'un réseau à plusieurs couches ou groupes d'éléments absorbeurs, qui se distinguent des autres soit par la distance des éléments au détecteur soit par leur surface d'absorption, ou les deux, et qui contribuent chacun à la formation d'une de ces images.

Des images plus nombreuses du rayonnement diffusé peuvent contribuer à une meilleure qualité du résultat final.

Sous sa forme préférée, le premier paramètre est un écart-type d'une fonction gaussienne et le second paramètre est une fonction de distribution à des pixels du détecteur, les fonctions étant bidimensionnelles sur le détecteur.

Sous une forme plus particulièrement préférée, le premier et le second paramètre sont estimés par des formules :

$$PF_i = PF\_0 \; x \int\limits_{r=\gamma_i \, x \, r_{BS}}^{\infty} dr \int\limits_{\theta=0}^{2\pi} DC_0 \; x \exp\left(-\frac{r^2}{2\sigma^2}\right) x \; r \; x \; d\theta$$

où PF_0 est une image de la mesure d'irradiation directe, PF$_i$ est l'image de rayonnement diffusé total de numéro i, σ est le premier paramètre, DCo est le second paramètre, r et θ sont des paramètres d'intégration, r$_{BS}$ est un rayon extérieur des éléments absorbeurs, γ$_i$ est un grossissement des éléments absorbeurs sur l'image de rayonnement diffusé de numéro i.

Les figures suivantes aideront à mieux faire comprendre l'invention au moyen d'une réalisation particulière de celle-ci :

- les figures 1 et 2 illustrent deux irradiations successives du détecteur,
- les figures 1a et 1b illustrent deux variantes de l'étape du procédé réalisée à la figure 1,
- la figure 3 illustre un objet d'étude,
- et les figures 4a et 4b illustrent des diagrammes de mesure obtenus avec cet objet.

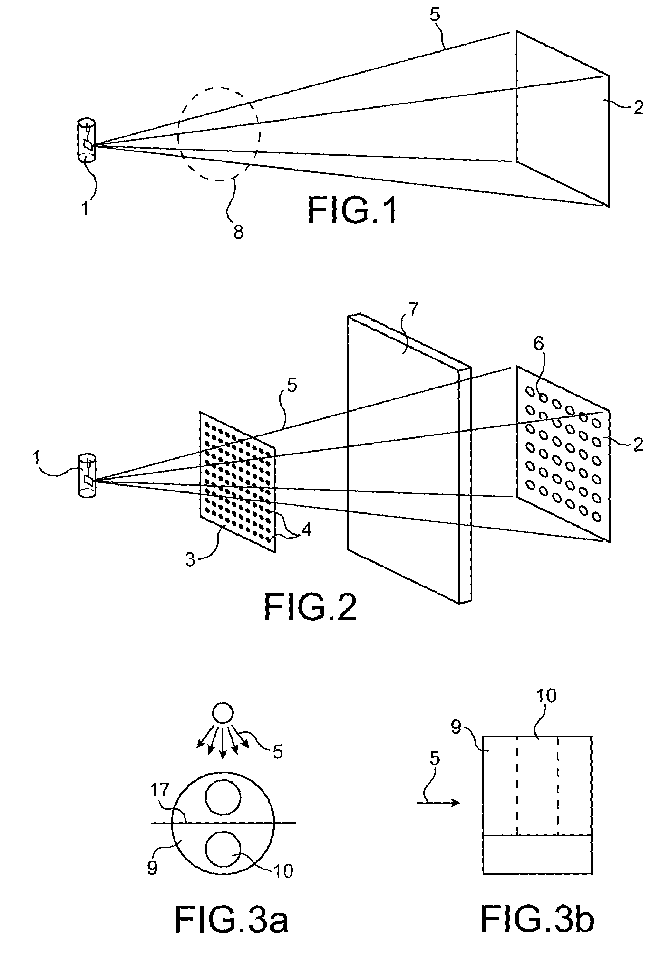

On passe maintenant à la description des figures. La première étape du procédé, illustrée à la figure 1, consiste en une calibration entreprise avec la source 1 du rayonnement 5 utilisé pour la mesure et le détecteur 2 de mesure, mais sans l'objet à étudier. Le rayonnement 5 est conique avec un sommet confondu avec la source 1. Une première mesure s'effectue avec une irradiation directe du détecteur pour donner une acquisition PF_O par le détecteur 2 sous un flux plein, sans aucune atténuation. L'acquisition PF_O est donc une image du rayonnement de la source 1 sur le détecteur 2 et du rayonnement diffusé dans le détecteur 2.

D'autres acquisitions de calibration impliquent l'emploi d'un absorbeur 3 qui est un réseau plan de petites billes 4 absorbant le rayonnement ("beam-stops") et séparées de distances connues, utilisé classiquement dans d'autres procédés de mesure de rayonnement diffusé. Les rayons traversant les billes 4 sont complètement absorbés et celles-ci se projettent en taches d'ombre 6 sur le détecteur 2. L'absorbeur 3 et la source 1 sont à des distances L et SD connues du détecteur 2.

Une nouvelle acquisition PF_BS est entreprise avec l'absorbeur 3 interposé, et l'image PF correspondante peut être reliée à l'image de l'acquisition précédente PF_0 par l'équation (1)

$$PF = PF\_0x \int\limits_{r=\gamma.r_{BS}}^{\infty} dr \int\limits_{\theta=0}^{2\pi} DC_0 x \exp\left(-\frac{r^2}{2\sigma^2}\right) x \; r \; x \; d\theta \; ,$$

où DC$_o$ et σ sont des paramètres modélisant le rayonnement diffusé dans le détecteur 2 et qu'il faut calculer, γ est le grossissement des billes 4 sur l'image, égal à la formule $\gamma = \dfrac{SD}{SD - L}$ , r$_{BS}$ est le rayon des billes 4, r et θ sont des paramètres d'intégration ; les multiplications sont entreprises séparément pour chacun des pixels du détecteur 2. Cette équation est calculée pour chaque centre de tache d'ombre 6, en exprimant que ce point reçoit une contribution de rayonnement diffusé de forme gaussienne provenant du reste de l'étendue du détecteur 2, de plus en plus faible selon l'éloignement du point d'origine du rayonnement diffusé, en excluant toutefois la contribution de la tache d'ombre 6 qui ne reçoit aucun rayonnement direct.

L'image PF résulte du traitement de l'acquisition PF_BS faite par le détecteur 2, en utilisant les valeurs de l'acquisition pour les endroits du détecteur 2 situés dans les taches d'ombre 6 et des valeurs d'interpolation entre les valeurs mesurées aux taches d'ombre 6 ailleurs. Le rayonnement primaire est alors éliminé, l'image PF exprime seulement une première estimation du rayonnement diffusé dans le détecteur 2. Cette estimation n'est pourtant pas le résultat recherché, et le procédé est poursuivi.

L'étape suivante de calibration est entreprise avec le même dispositif si ce n'est que l'absorbeur 3 est placé directement sur le détecteur 2, soit L=0, ce que représente la figure 2. Une acquisition PF_BS' est obtenue de la même façon que l'acquisition PF_BS, et une image PF' en est déduite de nouveau par des interpolations linéaires entre les valeurs mesurées sous les billes 4. Une équation (2)

$$PF' = PF\_0x \int_{r=r_{BS}}^{\infty} dr \int_{\theta=0}^{2\pi} DC_0 \, x \, \exp\left(-\frac{r^2}{2\sigma^2}\right) x \, r \, x \, d\theta$$

reliant l'image PF' à l'image PF_0 et analogue à la précédente est aussi obtenue ; elle en diffère par ce que le grossissement des billes 4 est ici égal à 1.

Aucune acquisition supplémentaire n'est nécessaire dans cette réalisation du procédé, mais il est tout de même possible d'en faire d'autres, à des distances L différentes de l'absorbeur 3 au détecteur 2, pour obtenir des valeurs finales moyennées de $\sigma$ et $DC_0$, probablement plus précises par un rapport du signal sur le bruit plus élevé. La seconde acquisition pourrait être faite à une autre distance L entre l'absorbeur 3 et le détecteur 2.

La suite du procédé fait apparaître deux coefficients intermédiaires. Un coefficient $\beta$ est la moyenne de l'image $\frac{PF}{PF'}$, obtenue en calculant le rapport des valeurs des images PF et PF' par irradiation indirecte pour chacun de leurs pixels puis en faisant la moyenne de ces rapports sur l'étendue des images PF et PF'. On peut déduire des équations (1) et (2) que :

$$\sigma^2 = \frac{r_{BS}^2 \, x \, (1 - \gamma^2)}{2\ln(\beta)} \, .$$

L'autre coefficient $\alpha$ caractérise la sous-estimation de la mesure du rayonnement diffusé dans le capteur dans l'image PF. Il est calculé par la formule suivante, établie à partir de l'équation (1) :

$$\alpha = \exp\left(-\frac{\gamma^2 x \, r_{BS}^2}{2\sigma^2}\right).$$

On en déduit de cette formule et des équations (1) et (2) que :

$$DC_0 = \frac{1}{\alpha} x \frac{PF}{PF\_0} \, ,$$

la division des deux images étant appliquée pixel par pixel et la fonction $DC_0$ étant donc une fonction bidimensionnelle de proportionnalité exprimée comme une image.

Le rayonnement diffusé dans le détecteur 2, exprimé par les coefficients $\sigma$ et $DC_o$, est alors connu dans les calibrations.

Quand une mesure effective d'un objet sera entreprise par le même système (l'absorbeur 3 étant retiré), le rayonnement diffusé par le détecteur 2, noté DC, pour le flux $\Phi$ appliqué sera alors modélisé par une équation DC ($\Phi$) = ($\Phi$ x $DC_0$)* K, où la multiplication représente de nouveau une opération de multiplication pour chaque pixel, l'étoile représente une opération de convolution bidimensionnelle sur la superficie du détecteur 2, K est un noyau de distribution du diffusé du capteur, qu'on suppose être une fonction gaussienne bidimensionnelle, normée, et dont l'écart-type est le paramètre $\sigma$ calculé précédemment.

Pour chacun des pixels, à l'acquisition des mesures de l'objet,

$$\Phi_{mesure} = \Phi_{direct} + (\Phi_{direct} \times DC_0) * K.$$

$\Phi_{mesure}$ correspond aux valeurs brutes de l'acquisition et $\Phi_{direct}$ au rayonnement atteignant le détecteur 2 et qui est la somme du rayonnement primaire atténué par l'objet et du rayonnement diffusé par l'objet. La tâche à accomplir consiste à calculer $\Phi_{direct}$, ce qu'on fait par un procédé classique par itération ou en utilisant une transformée de Fourier puisque $DC_0$ et K (ce dernier par l'intermédiaire de σ) sont connus maintenant. Le rayonnement diffusé par l'objet peut ensuite être corrigé par un autre procédé pour donner le rayonnement primaire et l'atténuation du rayonnement de la source 1.

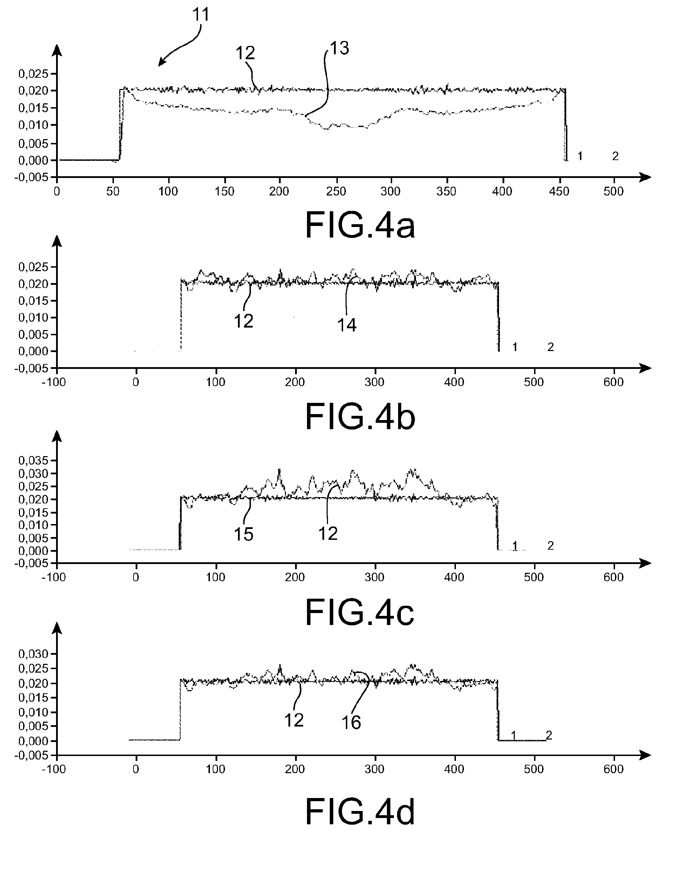

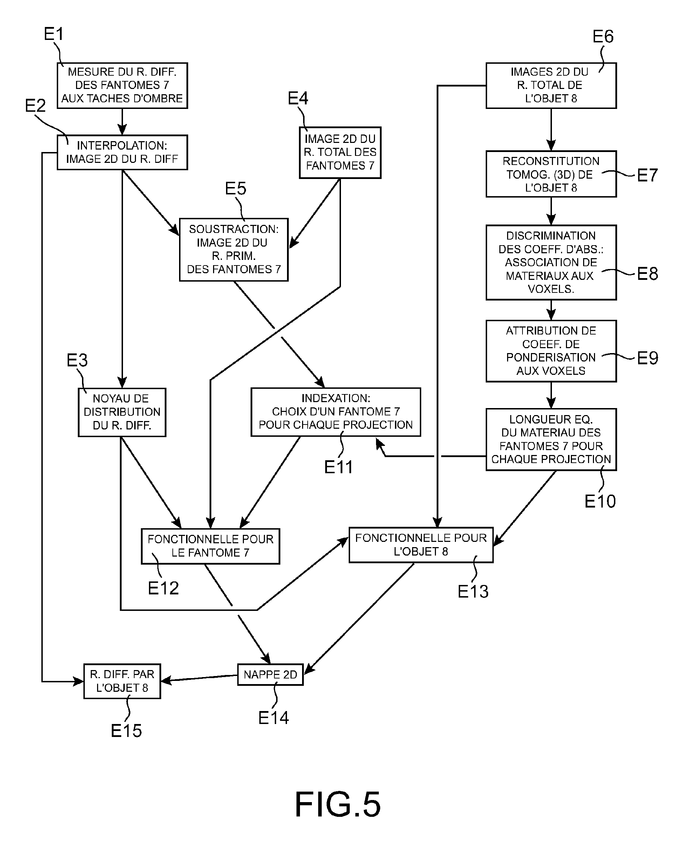

Les figures 3 et 4 représentent une application concrète du procédé pour un objet cylindrique en plexiglas 10 comprenant deux perçages 11 coaxiaux emplis d'air. La figure 4a représente les valeurs d'acquisition 7 obtenues sans correction du diffusé du détecteur 2, et la figure 4b les valeurs de rayonnement direct 8 calculées en appliquant le procédé de l'invention, comparées aux valeurs réelles d'atténuation 9 qu'on devrait obtenir dans les deux cas. On voit que l'application de l'invention donne des résultats bien meilleurs aussi bien pour les rayons traversant les portions hétérogènes (les cylindres d'air) que pour les rayons traversant des portions de transition entre les cylindres 11 d'air et la matrice 10 de plexiglas.

Enfin, le réseau 3 bidimensionnel des billes 4 pourrait être remplacé par un réseau 3a à couches multiples des billes 4 et 4a (figure 1a). Chacune des couches contribue alors simultanément à un groupe respectif de taches d'ombres 6a et 6'a sur le détecteur 2 pendant la même mesure si les billes 4a et 4'a des deux couches ne sont pas alignées sur des lignes de projection du rayonnement 5. Les mêmes images du rayonnement diffusé sont obtenues en utilisant séparément les taches d'ombre 6a et 6'a de chaque groupe. On pourrait aussi concevoir (figure 1b) l'utilisation d'un réseau de billes 4b et 4'b de superficies d'absorption différentes sur une même couche pour produire encore des taches d'ombre 6b et 6'b de superficies différentes, nécessaires à la formation des images du rayonnement diffusé. Ces variantes ont pour intérêt principal de donner toutes les images en une mesure unique.

## Revendications

1. Procédé d'estimation d'un rayonnement diffusé dans un détecteur bidimensionnel (2), **caractérisé en ce qu'**il consiste à : effectuer, en utilisant un rayonnement (5) identique, une mesure d'irradiation directe du détecteur (2), une première mesure d'irradiation indirecte du détecteur en interposant un absorbeur (3) composé d'un réseau bidimensionnel d'éléments (4) absorbeurs du rayonnement à une première distance (L) du détecteur (2), et une seconde mesure d'irradiation indirecte du détecteur en interposant l'absorbeur (3) à une seconde distance du détecteur (2) ; à déduire une première image de rayonnement diffusé et une seconde image de rayonnement diffusé sur le détecteur (2) de la première et de la seconde mesure d'irradiation indirecte ; à calculer un premier paramètre (σ) lié à une portée du rayonnement diffusé dans le détecteur par une comparaison de la première image de rayonnement diffusé et de la seconde image de rayonnement diffusé, et un second paramètre ($DC_0$) lié à une intensité du rayonnement diffusé dans le détecteur par une comparaison de l'image d'irradiation directe et d'une des images d'irradiation indirecte ; et, quand un rayonnement ($\Phi_{direct}$) d'un objet à étudier a été mesuré, à corriger ce rayonnement par un calcul de déconvolution utilisant les paramètres.

2. Procédé d'estimation d'un rayonnement diffusé dans un détecteur bidimensionnel (2), **caractérisé en ce qu'**il consiste à : effectuer, en utilisant un rayonnement (5) identique, une mesure d'irradiation directe du détecteur (2), une mesure multiple d'irradiation indirecte du détecteur en interposant un absorbeur (3) composé d'un réseau d'éléments (4) absorbeurs du rayonnement à une distance (L) du détecteur (2), les éléments (4) étant répartis en groupes distingués par des surfaces d'absorption et/ou des distances au détecteur différents ; à déduire une première image de rayonnement diffusé et une seconde image de rayonnement diffusé sur le détecteur (2) de la mesure multiple d'irradiation indirecte en recourant aux groupes respectifs des éléments absorbeurs (4) ; à calculer un premier paramètre (σ) lié à une portée du rayonnement diffusé dans le détecteur par une comparaison de la première image de rayonnement diffusé et de la seconde image de rayonnement diffusé, et un second paramètre ($DC_0$) lié à une intensité du rayonnement diffusé dans le détecteur par une comparaison de l'image d'irradiation directe et d'une des images d'irradiation indirecte ; et, quand un rayonnement ($\Phi_{direct}$) d'un objet à étudier a été mesuré, à corriger ce rayonnement par un calcul de déconvolution utilisant les paramètres.

3. Procédé d'estimation d'un rayonnement diffusé dans un détecteur bidimensionnel selon la revendication 1 ou 2, **caractérisé en ce que** le premier paramètre ($\sigma$) est un écart-type d'une fonction gaussienne et le second paramètre ($DC_0$) est une fonction de distribution à des pixels du détecteur (2), les fonctions étant bidimensionnelles sur le détecteur (2).

4. Procédé d'estimation d'un rayonnement diffusé dans un détecteur bidimensionnel selon la revendication 3, **caractérisé en ce que** le premier et le second paramètre sont estimés par des formules

$$PF_i = PF\_0 \; x \int\limits_{r=\gamma_i \; x \; r_{BS}}^{\infty} dr \int\limits_{\theta=0}^{2\pi} DC_0 \; x \exp\left(-\frac{r^2}{2\sigma^2}\right) x \; r \; x \; d\theta$$

Où PF_0 est une image de la mesure d'irradiation directe, $PF_i$ est l'image de rayonnement diffusé total de numéro i, $\sigma$ est le premier paramètre, DCo est le second paramètre, r et $\theta$ sont des paramètres d'intégration, $r_{BS}$ est un rayon extérieur des éléments (4) absorbeurs, $\gamma_i$ est un grossissement des éléments (4) absorbeurs sur l'image de rayonnement diffusé de numéro i.

5. Procédé d'estimation d'un segment diffusé dans un détecteur bidimensionnel selon l'une quelconque des revendications précédentes, **caractérisé en ce qu'**il comprend encore d'autres mesures d'irradiation indirecte du détecteur en interposant l'absorbeur (3) à d'autres distances du détecteur (2).

FIG.1

FIG.2

FIG.3a

FIG.3b

FIG.4a

FIG.4b

FIG.4c

FIG.4d

E1

MESURE DU R. DIFF.
DES FANTOMES 7
AUX TACHES D'OMBRE

E2

INTERPOLATION:
IMAGE 2D DU R. DIFF

E4

IMAGE 2D DU
R. TOTAL DES
FANTOMES 7

E6

IMAGES 2D DU
R. TOTAL DE
L'OBJET 8

RECONSTITUTION
TOMOG. (3D) DE
L'OBJET 8

E7

DISCRIMINATION
DES COEFF. D'ABS.:
ASSOCIATION DE
MATERIAUX AUX
VOXELS.

E8

E5

SOUSTRACTION:
IMAGE 2D DU
R. PRIM.
DES FANTOMES 7

ATTRIBUTION DE
COEEF. DE
PONDERISATION
AUX VOXELS

E9

E3

NOYAU DE
DISTRIBUTION
DU R. DIFF.

INDEXATION:
CHOIX D'UN FANTOME 7
POUR CHAQUE PROJECTION

E11

LONGUEUR EQ.
DU MATERIAU DES
FANTOMES 7 POUR
CHAQUE PROJECTION

E10

FONCTIONNELLE POUR
LE FANTOME 7

E12

FONCTIONNELLE POUR
L'OBJET 8

E13

R. DIFF. PAR
L'OBJET 8

E15

NAPPE 2D

E14

FIG.5

**Office européen des brevets**

**RAPPORT DE RECHERCHE EUROPEENNE**

Numéro de la demande

EP 07 10 1863

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | CLOSE R A ET AL: "Regularization method for scatter-glare correction in fluoroscopic images" MEDICAL PHYSICS AIP FOR AMERICAN ASSOC. PHYS. MED USA, vol. 26, no. 9, septembre 1999 (1999-09), pages 1794-1801, XP002406987 ISSN: 0094-2405 * abrégé * | 1 | INV. G01T1/29 G01T7/00 |
| A,D | KAWATA Y ET AL: "3-D image reconstruction with veiling glare correction to improve the contrast of 3-D reconstructed vascular images" IEEE TRANSACTIONS ON NUCLEAR SCIENCE IEEE USA, vol. 43, no. 1, février 1996 (1996-02), pages 304-309, XP002406988 ISSN: 0018-9499 * abrégé * | 1 | |

DOMAINES TECHNIQUES RECHERCHES (IPC)

G01T

Le présent rapport a été établi pour toutes les revendications

| Lieu de la recherche | Date d'achèvement de la recherche | Examinateur |
|---|---|---|
| La Haye | 10 septembre 2007 | Anderson, Alex |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CLOSE R. A. ; SHAH K. C. ; WHITING J. S.** Regularization method for scatter-glare correction in fluoroscopic image. *Medical Physics,* 1999, vol. 26 (9), 1794-1801

- **KAWATA Y. ; NIKI N.** 3-D Image Reconstruction with Veiling Glare correction to Improve the Contrast of 3-D Reconstructed Vascular Images. *IEEE Transaction On Nuclear Science,* 1996, vol. 43 (1), 304-309